# EUROPÄISCHE PATENTSCHRIFT

(11) **EP 1 328 392 B1**
(45) Veröffentlichungstag und Bekanntmachung des Hinweises auf die Patenterteilung: **08.12.2004**
(21) Anmeldenummer: 01987705.9
(22) Anmeldetag: 13.10.2001
(51) Int. Cl.: B29C 45/67

(54) **SCHLIESSEINRICHTUNG AN EINER KUNSTSTOFF-SPRITZGIESSMASCHINE**
CLOSING DEVICE ON A PLASTIC INJECTION MOULDING MACHINE
DISPOSITIF DE FERMETURE SUR UNE MACHINE A MOULER PAR INJECTION DE PLASTIQUE

(30) Priorität: 16.10.2000 DE 10051255
(43) Veröffentlichungstag der Anmeldung: 23.07.2003
(73) Patentinhaber: Hehl, Karl, 72290 Lossburg (DE)
(72) Erfinder: Hehl, Karl, 72290 Lossburg (DE)
(74) Vertreter: Reinhardt, Harry
(86) Internationale Anmeldenummer: PCT/EP2001/011854
(87) Internationale Veröffentlichungsnummer: WO 2002/032638

(56) Entgegenhaltungen:
- EP-A- 0 342 235
- DE-A- 19 820 934
- DE-C- 4 018 334
- DE-C- 19 809 666
- GB-A- 1 182 456

## Beschreibung

Die Erfindung betrifft eine Schließeinrichtung an der Formschließeinheit einer Kunststoffspritzgießmaschine zur Verarbeitung von Kunststoffen und anderen plastifizierbaren Massen nach dem Oberbegriff des Anspruches 1.

Eine derartige Schließeinrichtung ist aus der DE 36 44 181 C1 bekannt. In einem symmetrisch zu einer Symmetrieachse der Formschließeinrichtung angeordneten Druckzylinder ist ein Fahrzylinder im Kolben des Druckzylinders angeordnet. Der Druckkolben des Druckzylinders ist gemeinsam mit dem beweglichen Formträger beweglich. Ebenso ist die Kolbenstange des Fahrzylinders stationär angeordnet. Diametral zum Druckzylinder sind zwei Ausgleichszylinder angeordnet, die mit dem Niederdruckraum des Druckzylinders in offener Verbindung stehen. Bei der Schließbewegung wird Hydraulikmedium aus den Ausgleichszylindem und dem Niederdruckraum in den Hochdruckraum überführt, der dann die Zuhaltekraft aufbringt. Das Volumen der Ausgleichszylinder ist bei einer derartigen Ausführungsform allerdings begrenzt und um eine symmetrische Krafteinleitung zu gewährleisten, ist ein entsprechender Präzisionsaufwand erforderlich.

Aus der DE 38 44 432 C1 ist zur Aufbringung größerer Kräfte eine Schließeinrichtung bekannt, bei der wenigstens zwei Druckzylinder symmetrisch zur Mittelachse angeordnet sind. Der Fahrzylinder ist weiterhin mittig angeordnet und liegt im Ausgleichszylinder. In der Praxis hat sich jedoch gerade bei empfindlichen Spritzteilen herausgestellt, dass trotz der symmetrischen Anordnung der Druckzylinder es unter Umständen, vor allem nach entsprechender Lebensdauer der Maschine, zu Ungleichmäßigkeiten im Aufbau des Zuhaltedrucks kommen kann, die sich auf die Präzision der Spritzteile auswirken.

Bei einer aus der EP 0 281 329 A2 bekannten Schließeinrichtung ist ein Fahrzylinder im Druckkolben eines mittigen Druckzylinders angeordnet. Vom Druckkolben verdrängtes Volumen wird in einen Ausgleichszylinder überführt, wobei Druckkolben und Kolben des Ausgleichszylinders gemeinsam am beweglichen Formträger geführt sind. Der Ausgleichszylinder befindet sich allerdings unter dem Druckzylinder und ist insofern asymmetrisch angeordnet. Obwohl es sich beim Ausgleichszylinder um einen passiven Zylinder handelt, zeigt sich, dass die asymmetrische Anordnung zu einer ungleichmäßigen Kraftaufbringung mit den oben angeführten Nachteilen führt.

Aus der EP 0 281 330 A2 ist es bekannt, Fahrzylinder und Druckzylinder ineinander zu schachteln, jedoch keinen Ausgleichszylinder vorzusehen, sondern verdrängtes Hydraulikmedium über den Tank der Maschine zu führen. Dies führt einerseits zu einem regelmäßigen hohen Austausch an Hydraulikmedium, andererseits erhöht dies auch die Druckaufbauzeiten.

Aus der GB 1,182,456 ist eine Schließeinheit bekannt, bei der Druck- und Ausgleichszylinder konzentrisch angeordnet sind. Ein gesonderter Fahrzylinder ist jedoch nicht vorhanden. Damit kann keine gleichbleibende Präzision bei der Herstellung von Spritzteilen gewährleistet werden. Ein derartiger Gedanke ist in dieser Schrift auch nicht erwähnt.

Ausgehend von diesem Stand der Technik liegt der vorliegenden Erfindung die Aufgabe zugrunde, eine Schließeinrichtung für eine Spritzgießmaschine zu schaffen, die bei platzsparendem Aufbau den an die Präzision zu stellenden Anforderungen bei der Herstellung von Spritzteilen genügt.

Diese Aufgabe wird durch eine Schließeinrichtung mit den Merkmalen des Anspruches 1 gelöst.

Die Schließeinrichtung ist so aufgebaut, dass die Zylinder der Schließeinrichtung ineinander geschachtelt sind. Alle Zylinder sind konzentrisch zu einer Mittelachse angeordnet, so dass eine Krafteinleitung konzentrisch zu dieser Mittelachse erfolgt. Damit kommt es nicht mehr zu einer asymmetrischen Krafteinleitung innerhalb der Schließeinrichtung, so dass eine höhere Präzision der Spritzgießmaschine gewährleistet ist. Gleichzeitig ist das zum Aufbau des Zuhaltedrucks erforderliche Volumen an Hydraulikmedium leicht verfügbar, da es bei Bewegung aus Ausgleichszylinderraum und Niederdruckraum in den Hochdruckraum verdrängt wird. Damit sind schnelle Druckaufbauzeiten möglich.

Durch eine Ausgestaltung nach den Ansprüchen 5 bis 8 ergibt sich ein platzsparender Aufbau, da in den jeweiligen Kolben von Ausgleichszylinder und Druckzylindereinheit die entsprechenden Überströmkanäle unmittelbar vorgesehen sind, so dass auf zusätzliche hydraulische Leitungen verzichtet werden kann, die sich negativ auf die Druckaufbauzeiten auswirken würden.

Weitere Vorteile ergeben sich aus den Unteransprüchen.

Im folgenden wird die Erfindung anhand eines Ausführungsbeispiels näher erläutert. Es zeigen:
- Fig. 1: einen Ausschnitt aus einer Spritzgießmaschine mit einer auf einem Maschinenfuß angeordneten Formschließeinheit mit zugehöriger Spritzgießeinheit in Seitenansicht,
- Fig. 2,3: vergrößerte Längsschnitte durch die Schließeinrichtung gemäß Fig. 1 bei geöffnetem und geschlossenem Werkzeug,
- Fig. 4: einen vergrößerten Schnitt aus dem Mittelbereich von Fig. 3,
- Fig. 5: einen Schnitt nach Linie 5-5 von Fig. 2.

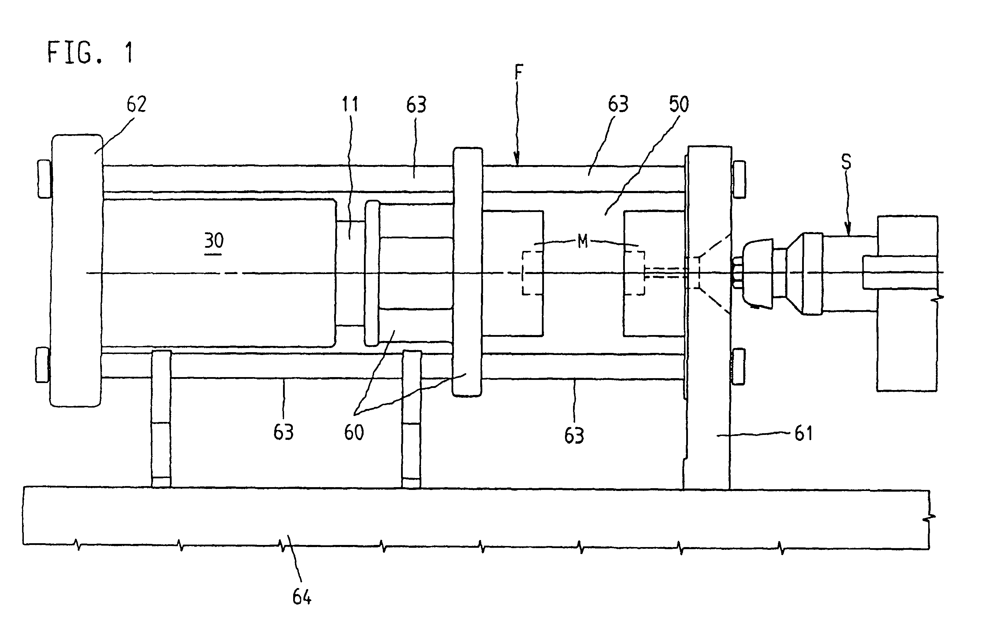

Figur 1 zeigt die Schließeinrichtung an einer Formschließeinheit F einer Kunststoff-Spritzgießmaschine zur Verarbeitung von Kunststoffen und anderen plastifizierbaren Massen wie z.B. pulvrigen Massen oder keramischen Massen. Die Formschließeinheit F ist auf einem Maschinenfuß 64 abgestützt und umfasst einen stationären Formträger 61, einen beweglichen Formträger 60 sowie ein Abstützelement 62. Am Abstützelement 62 ist die Schließeinrichtung abgestützt, von der in Figur 1 der außen liegende Ausgleichszylinder 30 und der diesem Ausgleichszylinder als Kolben dienende Druckzylinder 11 zu sehen ist. Bei Betätigung der Druckzylindereinheit, auf was noch näher einzugehen sein wird, wird der bewegliche Formträger 60 bewegt, wobei er entlang den Führungsholmen oder Führungssäulen 63 geführt ist. Im Formspannraum 50 ist eine Spritzgießform M aufgenommen, die infolge der Bewegung der Schließeinrichtung zyklisch geöffnet und geschlossen wird. Im geschlossenen Zustand wird über eine Öffnung des stationären Formträgers 61 von der Spritzgießeinheit S plastifiziertes Material in den Formhohlraum der Spritzgießform M eingespritzt. Insofern zeigt Figur 1 den üblichen Aufbau einer Formschließeinheit an einer Kunststoff-Spritzgießmaschine. Allerdings sind auch andere Aufbauten der Formschließeinheit möglich. So könnte z.B. bei einem Aufbau im Sinne der DE 36 44 181 C1 die Formschließeinheit das Abstützelement nach hinten überragen und diese in Richtung auf den beweglichen Formträger durchgreifen.

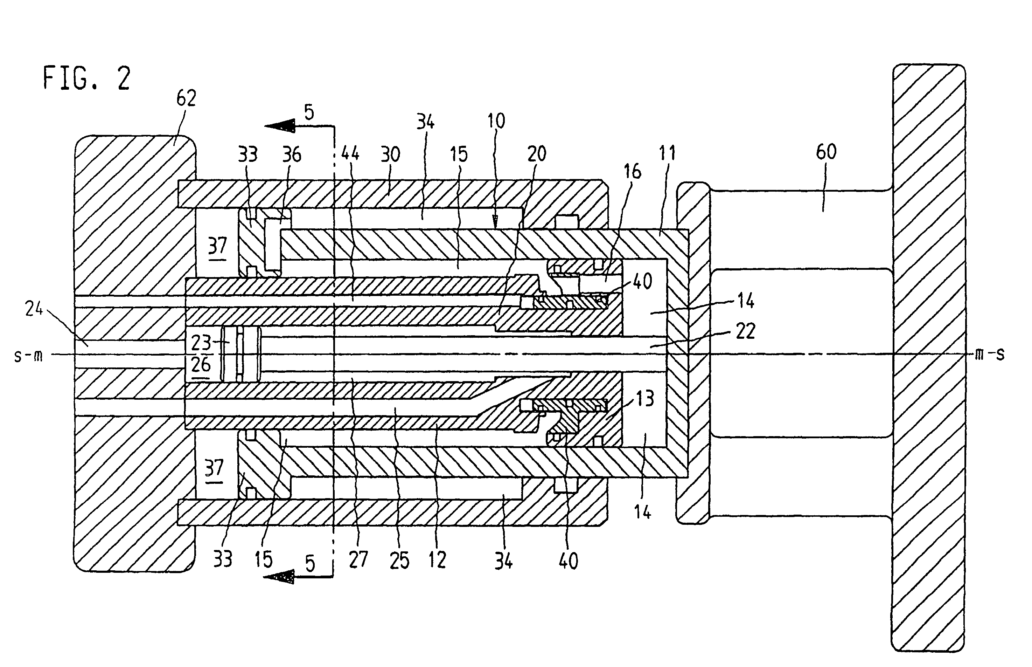

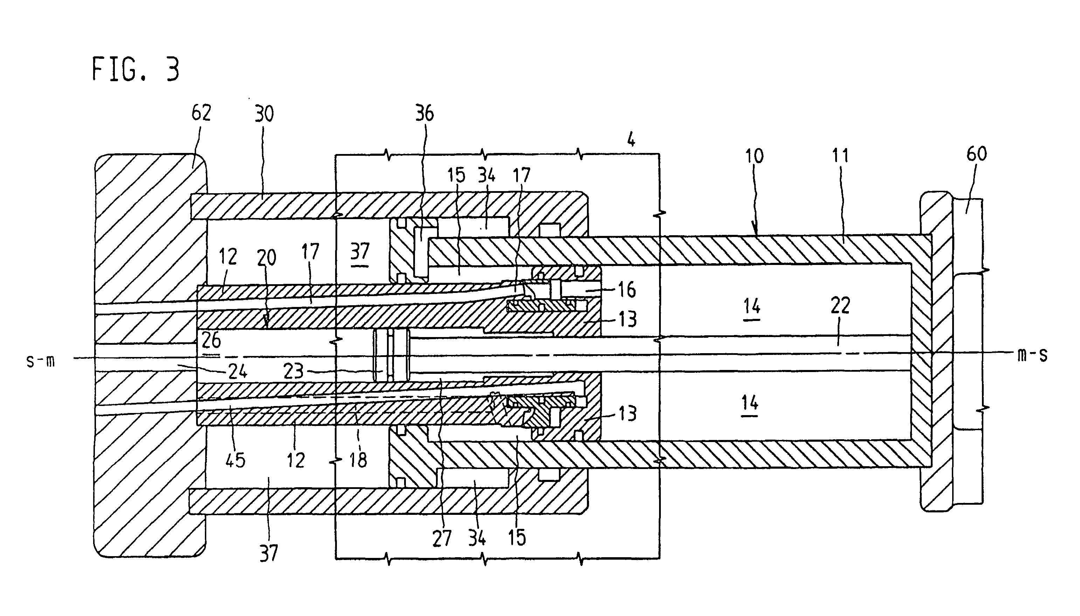

Gemäß den Figuren 2 und 3 besitzt die Schließeinrichtung wenigstens eine hydraulische Druckzylindereinheit 10 zum Aufbau des Zuhaltedrucks auf die Spritzgießform M in deren geschlossenen Zustand, was einer Stellung der Schließeinrichtung gemäß Fig. 3 entspricht. Im Ausführungsbeispiel wird lediglich eine einzige Druckzylindereinheit 10 gezeigt, deren Mittelachse m-m zugleich die Mittelachse bzw. Symmetrieachse s-s der Formschließeinheit ist. Dies hat den Vorteil einer optimalen symmetrischen Krafteinleitung auf den beweglichen Formträger 60 und damit auf die Spritzgießform M. Da andererseits die Zylinder sich voll umfänglich umschließen, können die notwendigen Volumina platzsparend zur Verfügung gestellt werden. Grundsätzlich können aber auch mehrere entsprechend aufgebaute Schließeinrichtungen parallel zueinander angeordnet sein, sofern ein entsprechend gleichmäßiger Druckaufbau in den einzelnen Druckzylindereinheiten gewährleistet wird.

In der Druckzylindereinheit 10 ist ein Druckkolben 13 vorgesehen, dessen Kolbenstange 12 entlang der Mittelachse m-m der Druckzylindereinheit 10 angeordnet ist. Gemäß Figur 2 und 3 trennt dieser Druckkolben 13 den Hochdruckraum 14 der Druckzylindereinheit vom Niederdruckraum 15. Über die Druckzylindereinheit 10 wird vor allem nach Schließen der Form der Zuhaltedruck im Hochdruckraum 14 innerhalb des Zylinders 11 gemäß Figur 3 aufgebaut. Das Öffnen und Schließen der Spritzgießform - wobei im wesentlichen die Massen der Schließeinrichtung bewegt werden müssen, so dass hierfür ein geringer Druck ausreicht - erfolgt über einen der Druckzylindereinheit 10 zugeordneten, hydraulischen Antriebszylinder 20. Der Antriebszylinder 20 ist konzentrisch zur Mittelachse m-m angeordnet, wobei sein eigentlicher Zylinder durch die Kolbenstange 12 der Druckzylindereinheit 10 gebildet ist. Mit anderen Worten liegt der Antriebszylinder 20 konzentrisch in der Druckzylindereinheit 10.

Zum Schließen der Form wird über eine Hydraulikleitung in Form der Bohrung 24 Hydraulikmedium dem Zylinderraum 26 zugeführt, zum Öffnen der Form wird über eine in der Kolbenstange 12 der Druckzylindereinheit angeordnete Hydraulikleitung in Form der Bohrung 25 Hydraulikmedium dem Zylinderraum 27 überführt. Um das durch den Druckkolben beim Öffnen der Spritzgießform M aus dem Hochdruckraum 14 verdrängte Hydraulikmedium nicht bei jedem Spritzzyklus in den Tank und anschließend von dort wieder in den Hochdruckraum zu pumpen, wird ein der Druckzylindereinheit 10 zugeordneter, hydraulischer Ausgleichszylinder 30 zur Aufnahme bzw. Abgabe von aus der Druckzylindereinheit 10 kommenden bzw. an diese abzugebenden Hydraulikmedium vorgesehen. Der Ausgleichszylinderraum 34 steht mit dem Niederdruckraum 15 der Druckzylindereinheit 10 in offener Verbindung.

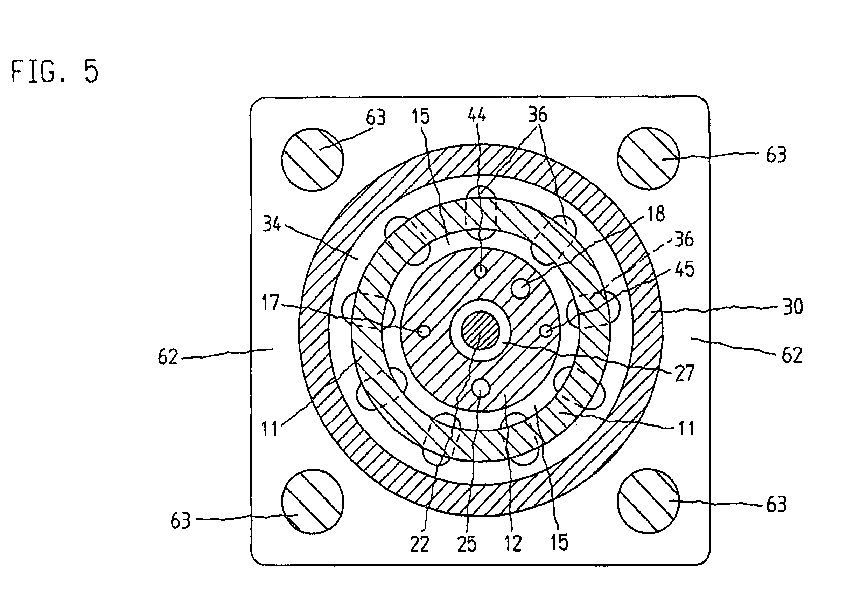

Gemäß Figur 5 in Verbindung mit Fig. 2 und 3 ist der Ausgleichszylinder 30 ebenfalls konzentrisch zur Mittelachse m-m angeordnet. Damit sind sämtliche Zylinder ineinander geschachtelt und konzentrisch zur Mittelachse m-m angeordnet. Dies führt zu einem symmetrischen Aufbau, so dass nicht einmal das eigentlich nur passive Volumen des Ausgleichszylinders einen negativen Einfluss auf die Präzision der Spritzgießmaschine haben kann.

Diese Anordnung führt dazu, dass die eigentliche Kolbenstange des Ausgleichszylinders 30 durch den Zylinder 11 der Druckzylindereinheit 10 gebildet ist, also in ähnlicher Weise eine Doppelfunktion erfüllt wie die Kolbenstange 12 der Druckzylindereinheit 10 im Hinblick auf den Antriebszylinder 20. Im Ausführungsbeispiel sind der Druckkolben 13 und die Kolbenstange 12 sowie der Ausgleichszylinder 30 stationär, d.h. mit dem Abstützelement 62 verbunden. Der Zylinder 11 der Druckzylindereinheit 10 und damit der Kolben des Ausgleichszylinders sowie die Kolbenstange 22 mit dem Kolben 23 des Antriebszylinders hingegen sind mit dem beweglichen Formträger verbunden, was zu einer entsprechenden Reduzierung der zu bewegenden Massen führt. Eine Umkehrung ist jedoch möglich.

Zwischen den einzelnen Zylinderräumen wird das Hydraulikmedium über Überströmkanäle befördert. So befindet sich im Kolben 33 des Ausgleichszylinders 30 ein Überströmkanal 36, um die offene Verbindung zwischen dem Ausgleichszylinderraum 34 und dem Niederdruckraum 15 der Druckzylindereinheit 10 herzustellen. Gemäß Figur 5 ist dieser Überströmkanal durch verschiedene Bohrungen im Kolben 33 gebildet, so dass ein schnelles und strömungstechnisch problemloses Überführen des Hydraulikmediums aus dem Ausgleichszylinderraum 34 in den Niederdruckraum 15 erfolgen kann. Im Druckkolben 13 der Druckzylindereinheit 10 ist ein weiterer Überströmkanal 16 vorhanden, der jedoch über ein Ventil absperrbar ist, um bedarfsweise die Trennung zwischen Niederdruckraum 15 und Hochdruckraum 14 zu ermöglichen. Als hydraulisch betätigbares Ventil wird ein an der Kolbenstange 12 bzw. im Druckkolben 13 der Druckzylindereinheit 10 begrenzt beweglicher Ringkolben 40 vorgesehen. Ist der Überströmkanal 16 geöffnet, so wird beim Schließen der Form, also bei einer Überführung der Schließeinrichtung aus einer Stellung gemäß Fig. 2 in eine Stellung gemäß Fig. 3 Hydraulikmedium zunächst über die Bohrung 24 in den Zylinderraum 26 gefördert. Infolge der dadurch veranlassten Bewegung wird zunächst Hydraulikmedium aus dem Hydraulikraum 27 des Antriebszylinders 20 über eine Hydraulikleitung in Form der Bohrung 25 verdrängt. Da mit dieser Bewegung aber auch der Zylinder 11 in Fig. 2 nach rechts bewegt wird, wird Hydraulikmedium aus dem Ausgleichszylinderraum 34 über den Überströmkanal 36 in den Niederdruckraum 15 und von dort über den Überströmkanal 16 in den Hochdruckraum 14 verdrängt. Da der Kolben 33 des Ausgleichszylinders 30 nur einseitig mit Hydraulikmedium beaufschlagbar ist, befindet sich im Raum 37 atmosphärischer Druck. Gleichzeitig ergibt sich ein platzsparender Aufbau, da in den jeweiligen Kolben von Ausgleichszylinder 30 und Druckzylindereinheit 10 die entsprechenden Überströmkanäle unmittelbar vorgesehen sind, so dass auf zusätzliche hydraulische Leitungen verzichtet werden kann, die sich negativ auf die Druckaufbauzeiten auswirken würden.

Die Volumina des Ausgleichszylinderraums 34 und des Niederdruckraumes 15 gemäß Fig. 2 entsprechen etwa dem Volumen des Hochdruckraums 14 in geschlossener Stellung der Spritzgießform M gemäß Fig. 3. Dabei ist jedoch gewährleistet, dass bei jedem Zyklus zumindest ein geringer Ölaustausch stattfindet, um eine Reinigung und Kühlung des Hydraulikmediums sicher zu stellen.

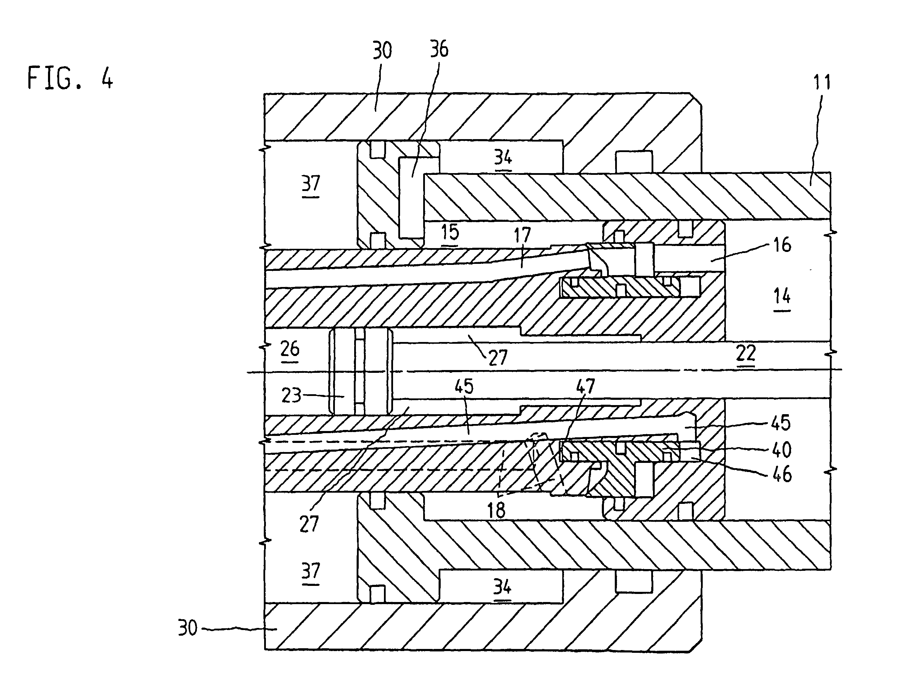

Befindet sich die Schließeinrichtung in der Stellung gemäß Fig. 3, muss der Zuhaltedruck im Hochdruckraum 14 aufgebaut werden. Hierzu wird zunächst der als Ventil vorgesehene Ringkolben 40 über eine Hydraulikleitung in Form der Bohrung 45 geschlossen. Anschließend wird über eine Hydraulikleitung in Form der Bohrung 17 der Zuhaltedruck aufgebaut, wobei im Ausführungsbeispiel der Ringkolben 40, also das Ventil selbst durchdtrömt wird. Ist der Spritzgießvorgang beendet, wird zunächst Druck wieder über die Bohrung 17 abgebaut. Dann wird der Ringkolben 40 über eine Hydraulikleitung in Form der Bohrung 44 und den Zylinderraum 47 unter Verdrängung des Hydraulikmediums im Zylinderraum 46 zurückgestellt, so dass der Druck im Hochdruckraum abgebaut wird. Grundsätzlich kann nun die Spritzgießform über Zufuhr von Hydraulikmedium über die Bohrung 25 zum Hydraulikraum 27 wieder geöffnet werden. Genügt dieser Druck nicht zum Öffnen der Form, so kann zusätzlich ein Hochdrucköffnen über die in Figur 3 und 4 gestrichelt eingezeichnete Bohrung 18 erfolgen, über die Hydraulikmedium bei geschlossenen Ringkolben 40 (Fig. 3,4) in den Niederdruckraum 15 zusätzlich überführt werden kann.

### Liste der Bezugszeichen

- 10: Druckzylindereinheit
- 11: Zylinder
- 12: Kolbenstange
- 13: Druckkolben
- 14: Hochdruckraum
- 15: Niederdruckraum
- 16: Überströmkanal
- 17,18: Bohrung
- 20: Antriebszylinder
- 22: Kolbenstange
- 23: Kolben
- 24,25: Bohrung
- 26,27: Zylinderraum
- 30: Ausgleichszylinder
- 33: Kolben
- 34: Ausgleichszylinderraum
- 36: weiterer Überströmkanal
- 37: Raum
- 40: Ringkolben
- 44,45: Bohrung
- 46,47: Zylinderraum
- 50: Formspannraum
- 60: beweglicher Formträger
- 61: stationärer Formträger
- 62: Abstützelement
- 63: Führungsholm
- 64: Maschinenfuß

- F: Formschließeinheit
- M: Spritzgießform
- S: Spritzgießeinheit
- m-m: Mittelachse
- s-s: Symmetrieachse

## Patentansprüche

1. Schließeinrichtung an der Formschließeinheit (F) einer Kunststoff-Spritzgießmaschine zur Verarbeitung von Kunststoffen und anderen plastifizierbaren Massen mit
- wenigstens einer hydraulischen Druckzylindereinheit (10) zum Aufbau eines Zuhaltedrucks auf eine Spritzgießform (M), die in einem Formspannraum (50) aufgenommen ist,
- einem in der Druckzylindereinheit (10) angeordneten Druckkolben (13), dessen Kolbenstange (12) entlang einer Mittelachse (m-m) der Druckzylindereinheit (10) angeordnet ist und der den Hochdruckraum (14) der Druckzylindereinheit von deren Niederdruckraum (15) trennt,
- einem der Druckzylindereinheit zugeordneten, hydraulischen Antriebszylinder (20) zum Schließen der Spritzgießform (M), der konzentrisch zur Mittelachse (m-m) angeordnet ist und dessen eigentlicher Zylinder durch den Druckkolben (13) der Druckzylindereinheit (10) gebildet ist,
- einem der Druckzylindereinheit (10) zugeordneten, hydraulischen Ausgleichszylinder (30) zur Aufnahme bzw. Abgabe von aus der Druckzylindereinheit (10) kommenden bzw. an diese abzugebenden Hydraulikmedium, dessen Ausgleichszylinderraum (34) mit dem Niederdruckraum (15) der Druckzylindereinheit (10) in offener Verbindung steht,
**dadurch gekennzeichnet, dass** der Ausgleichszylinder (30) ebenfalls konzentrisch zur Mittelachse (m-m) angeordnet ist.

2. Schließeinrichtung nach Anspruch 1, **dadurch gekennzeichnet, dass** die eigentliche Kolbenstange des Ausgleichszylinders (30) durch den Zylinder (11) der Druckzylindereinheit (10) gebildet ist.

3. Schließeinrichtung nach Anspruch 1 oder 2, **dadurch gekennzeichnet, dass** Druckkolben (13) und Kolbenstange (12) der Druckzylindereinheit (10) stationär sind.

4. Schließeinrichtung nach einem der vorhergehenden Ansprüche, **dadurch gekennzeichnet, dass** die Kolbenstange des Ausgleichszylinders (30) und damit der Zylinder (11) der Druckzylindereinheit (10) mit dem beweglichen Formträger (60) zur gemeinsamen Bewegung verbunden ist.

5. Schließeinrichtung nach einem der vorhergehenden Ansprüche, **dadurch gekennzeichnet, dass** der Kolben (33) des Ausgleichszylinders (30) einen Überströmkanal (36) für die offene Verbindung des Ausgleichszylinderraums (34) mit dem Niederdruckraum (15) der Druckzylindereinheit (10) aufweist.

6. Schließeinrichtung nach einem der vorhergehenden Ansprüche, **dadurch gekennzeichnet, dass** der Ausgleichszylinder (30) die Druckzylindereinheit (10) ummantelt.

7. Schließeinrichtung nach einem der vorhergehenden Ansprüche, **dadurch gekennzeichnet, dass** im Druckkolben (13) der Druckzylindereinheit (10) ein über Ventil absperrbarer weiterer Überströmkanal (16) zwischen Niederdruckraum (15) und Hochdruckraum (14) vorgesehen ist.

8. Schließeinrichtung nach Anspruch 7, **dadurch gekennzeichnet, dass** das hydraulisch betätigbare Ventil durch einen an der Kolbenstange (12) bzw. im Druckkolben (13) der Druckzylindereinheit (10) begrenzt beweglichen Ringkolben (40) gebildet ist.

9. Schließeinrichtung nach einem der vorhergehenden Ansprüche, **dadurch gekennzeichnet, dass** der Kolben (33) des Ausgleichszylinders (30) nur einseitig mit Hydraulikmedium beaufschlagbar ist.

10. Schließeinrichtung nach einem der vorhergehenden Ansprüche, **dadurch gekennzeichnet, dass** Niederdruckraum (15) und Ausgleichszylinderraum (34) bedarfsweise über eine Hydraulikleitung, vorzugsweise eine Bohrung (18) zusätzlich mit Druck beaufschlagbar sind.

## Claims

1. Closing device for a mould closing unit (F) of a plastic injection moulding machine for processing plastics materials and other plasticizable substances, said device having
- at least one hydraulic pressure cylinder unit (10) for building-up a pressure, for keeping the mould closed, on an injection mould (M) which is accommodated in a mould clamping chamber (50),
- a pressure piston (13) disposed in the pressure cylinder unit (10), the piston rod (12) of which piston is disposed along a central axis (m-m) of the pressure cylinder unit (10), and which piston separates the highpressure chamber (14) of the pressure cylinder unit from the low-pressure chamber (15) thereof,
- an hydraulic drive cylinder (20), associated with the pressure cylinder unit (10), for closing the injection mould (M), which cylinder is disposed concentrically relative to the central axis (m-m), and the actual cylinder of which drive cylinder is formed by the pressure piston (13) of the pressure cylinder unit (10),
- an hydraulic compensating cylinder (30), associated with the pressure cylinder unit (10), for receiving or respectively dispensing hydraulic medium, which comes from the pressure cylinder unit (10) or respectively is to be dispensed to said unit, and comprising a compensating cylinder chamber (34) being in open communication with the low-pressure chamber (15) of the pressure cylinder unit (10),
**characterized in that** the compensating cylinder (30) is likewise disposed concentrically relative to the central axis (m-m).

2. Closing device according to claim 1, **characterized in that** an actual piston rod of the compensating cylinder (30) is formed by the cylinder (11) of the pressure cylinder unit (10).

3. Closing device according to claim 1 or 2, **characterized in that** pressure piston (13) and piston rod (12) of the pressure cylinder unit (10) are stationary.

4. Closing device according to one of the preceding claims, **characterized in that** the piston rod of the compensating cylinder (30) and, hence, the cylinder (11) of the pressure cylinder unit (10) are connected to the movable mould carrier (60) for common displacement.

5. Closing device according to one of the preceding claims, **characterized in that** the piston (33) of the compensating cylinder (30) comprises an overflow duct (36) for the open connection between the compensating cylinder chamber (34) and the low-pressure chamber (15) of the pressure cylinder unit (10).

6. Closing device according to one of the preceding claims, **characterized in that** the compensating cylinder (30) surrounds the pressure cylinder unit (10).

7. Closing device according to one of the preceding claims, **characterized in that** an additional overflow duct (16) between low-pressure chamber (15) and highpressure chamber (14) is provided in the pressure piston (13) of the pressure cylinder unit (10), which duct can be shut-off via a valve.

8. Closing device according to claim 7, **characterized in that** the hydraulically actuatable valve is formed by an annular piston (40), which is displaceable to a limited extent on the piston rod (12) or respectively in the pressure piston (13) of the pressure cylinder unit (10).

9. Closing device according to one of the preceding claims, **characterized in that** the piston (33) of the compensating cylinder (30) can only be acted upon with hydraulic medium on one side.

10. Closing device according to one of the preceding claims, **characterized in that** low-pressure chamber (15) and compensating cylinder chamber (34) can, if necessary, be additionally acted upon with pressure via an hydraulic pipe, preferably a bore (18).

## Revendications

1. Dispositif de fermeture sur l'unité de fermeture de moule (F) d'une machine d'injection de matière plastique pour le traitement de matière plastique et d'autres masses plastifiables comportant :
- au moins une unité hydraulique à cylindre de pression (10) pour constituer une pression de verrouillage sur un moule d'injection (M), laquelle est reçue dans un espace de serrage de moule (50),
- un piston de pression (13) disposé dans l'unité à cylindre de pression (10) dont la tige de piston (12) est disposée le long d'un axe médian (m-m) de l'unité à cylindre de pression (10), et qui sépare la chambre de haute pression (14) de l'unité à cylindre de pression de sa chambre de basse pression (15),
- un cylindre d'entraînement hydraulique (20), associé à l'unité à cylindre de pression pour la fermeture du moule d'injection (M), lequel est disposé concentriquement à l'axe médian (m-m) et dont le cylindre proprement dit est formé par le piston de pression (13) de l'unité à cylindre de pression (10),
- un cylindre de compensation hydraulique (30), associé à l'unité à cylindre de pression (10), pour recevoir ou délivrer le fluide hydraulique provenant de l'unité à cylindre de pression (10) ou à délivrer à celle-ci, dont la chambre de cylindre de compensation (34) est en liaison ouverte avec la chambre de basse pression (15) de l'unité à cylindre de pression (10),
**caractérisé en ce que** le cylindre de compensation (30) est également disposé concentriquement à l'axe médian (m-m).

2. Dispositif de fermeture selon la revendication 1, **caractérisé en ce que** la tige de piston proprement dite du cylindre de compensation (30) est formée par le cylindre (11) de l'unité à cylindre de pression (10).

3. Dispositif de fermeture selon la revendication 1 ou 2, **caractérisé en ce que** le piston de pression (13) et la tige de piston (12) de l'unité à cylindre de pression (10) sont fixes.

4. Dispositif de fermeture selon l'une des revendications précédentes, **caractérisé en ce que** la tige de piston du cylindre de compensation (30) et donc le cylindre (11) de l'unité à cylindre de piston (10) sont reliés au porte-moule (60) mobile pour leur déplacement commun.

5. Dispositif de fermeture selon l'une des revendications précédentes, **caractérisé en ce que** le piston (33) du cylindre de compensation (30) comporte un canal de trop-plein (36) pour la liaison ouverte de la chambre du cylindre de compensation (34) avec la chambre de basse pression (15) de l'unité à cylindre de pression (10).

6. Dispositif de fermeture selon l'une des revendications précédentes, **caractérisé en ce que** le cylindre de compensation (30) entoure l'unité à cylindre de pression (10).

7. Dispositif de fermeture selon l'une des revendications précédentes, **caractérisé en ce que** dans le piston de pression (13) de l'unité à cylindre de pression (10) est prévu un autre canal de trop-plein (16), qui peut être fermé au moyen d'une soupape, entre la chambre de basse pression (15) et la chambre de haute pression (14).

8. Dispositif de fermeture selon la revendication 7, **caractérisé en ce que** la soupape à actionnement hydraulique est formée par un piston annulaire (40) déplaçable de manière limitée sur la tige de piston (12) ou dans le piston de pression (13) de l'unité à cylindre de pression (10).

9. Dispositif de fermeture selon l'une des revendications précédentes, **caractérisé en ce que** le piston (33) du cylindre de compensation (30) ne peut recevoir le fluide hydraulique que sur un côté.

10. Dispositif de fermeture selon l'une des revendications précédentes, **caractérisé en ce que** la chambre de basse pression (15) et la chambre du cylindre de compensation (34) peuvent être soumises au besoin à une pression supplémentaire par l'intermédiaire d'une conduite hydraulique, de préférence un perçage (18).
